# EUROPEAN PATENT SPECIFICATION

(11) **EP 0 417 466 B1**
(45) Date of publication and mention of the grant of the patent: **25.10.1995**
(21) Application number: 90115076.3
(22) Date of filing: 06.08.1990
(51) Int. Cl.: G01P 3/44

(54) **Assembly for connecting a wheel to an industrial vehicle axle provided with a device measuring the wheel velocity**
Einrichtung zum Verbinden eines Rades mit der Achse eines Industriefahrzeuges, das mit einer Einrichtung zur Messung der Radgeschwindigkeit ausgerüstet ist
Assemblage pour attacher une roue à un véhicule industriel équipé d'un dispositif pour mesurer la vitesse de la roue

(30) Priority: 12.09.1989 IT 5334089 U
(43) Date of publication of application: 20.03.1991
(73) Proprietor: IVECO FIAT S.p.A., 10156 Torino (IT)
(72) Inventor: Randone, Claudio, I-10040 Almese (IT)
(74) Representative: Jorio, Paolo

(56) References cited:
- EP-A- 0 053 894
- EP-A- 0 136 493
- DE-A- 2 154 448
- US-A- 3 961 215

## Description

This invention relates to an assembly for connecting a wheel to the axle of a vehicle, particularly an industrial vehicle, of the type comprising a device for measuring the wheel velocity.

In this respect, in the present description and claims the term "axle" is to be taken in its widest sense without any limit on the arrangement of the axle in the vehicle and independently of whether the axle concerned is a live axle or not.

Assemblies for connecting a wheel to a vehicle axle are known, comprising a hub and a pair of bearings, generally of the taper roller type, which support the hub radially and axially to the axle. The wheel and its brake drum are connected to the radial flange of the hub by a plurality of bolts.

The connection assemblies of the aforesaid type frequently comprise a device for measuring the wheel velocity, associated with a braking control device to prevent wheel locking, and consisting of a phonic wheel rigid with the hub, and a sensor which is generally mounted in a projecting manner on a support element welded to the axle.

The mounting assemblies of this briefly described type have certain drawbacks.

Firstly, the fact that the sensor projects means that when in operation it undergoes flexural vibration which can generate uncertainty or disturbance in the measurement of the wheel velocity.

In addition the welding of the sensor support is an operation which is relatively costly and uncomfortable to carry out.

A connection assembly of the aforementioned type is disclosed for example in EP-A-0 136 493, the features thereof form the basis for the preamble of claim 1.

US-A-3 961 215 and DE-A-2 154 448 disclose further examples of assemblies for connecting a wheel to a vehicle axle, in which the sensor of the velocity measurement system is housed in relatively complex support means.

The object of the present invention is to provide an assembly for connecting a wheel to an industrial vehicle axle, which is free of the aforesaid drawbacks connected with known assemblies.

Said object is attained according to the present invention by an assembly as claimed in claim 1.

The present invention will be more apparent from the description of a preferred embodiment thereof given hereinafter with reference to the accompanying drawings in which:
Figure 1 is an axial section through an assembly for connecting a wheel to a rear live axle of an industrial vehicle;
Figure 2 is a section on the line II-II of Figure 1; and
Figure 3 is a section on the line III-III of Figure 1 to an enlarged scale.

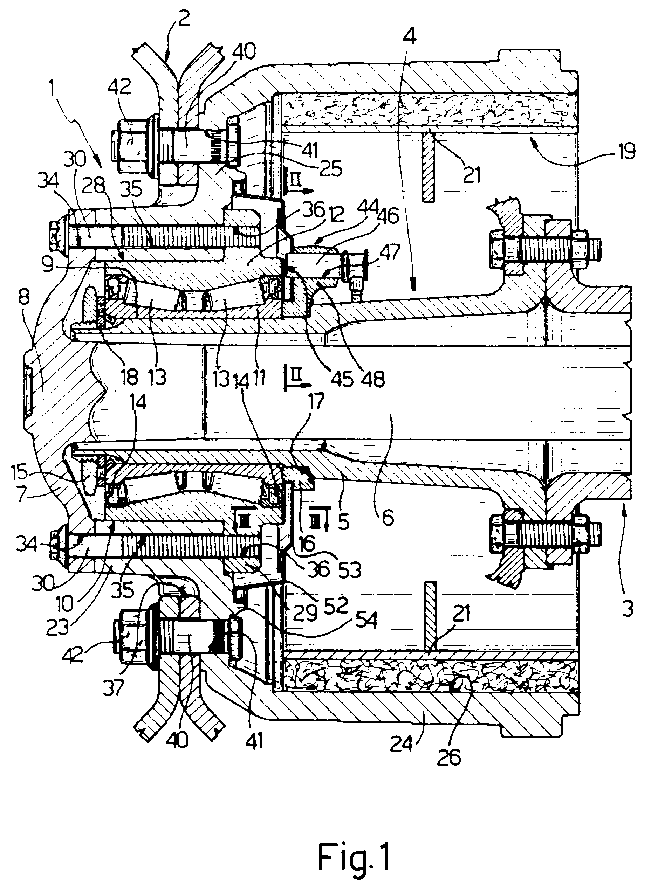

In Figure 1 the reference numeral 1 indicates overall an assembly for connecting a partly shown wheel 2 to an industrial vehicle live axle 3, of which a lateral end portion 4 is shown.

Said portion 4 of the axle 3 comprises a tubular sleeve 5 and an axle shaft 6 housed angularly free within the sleeve 5 and integrally provided with a drive flange 7 extending radially from an end 8 of the axle shaft 6, this end projecting axially outwards from the sleeve 5.

In proximity to its outer end the sleeve 5 comprises a cylindrical portion 9 on which a support unit 10 is mounted. The unit 10 comprises an inner ring 11, an outer ring 11 coaxial therewith, and two rows of taper rollers 13 interposed between said rings 11, 12. The unit 10 is of the sealed type by virtue of a pair of lateral gaskets 14, with lifelong grease lubrication.

The inner ring 11 of the unit 10 is locked axially on the sleeve 5 by a ring nut 15 which clamps it against a spacer ring 16, the purpose of which is clarified hereinafter and which abuts axially against a shoulder 17 of the sleeve. An anti-slackening washer of conventional type is interposed between the ring nut 15 and ring 11.

The connection assembly 1 also comprises a drum brake 19, of which the drum 20 and part of the brake shoes 21 are visible in Figure 1. The drum 20 is substantially of bell shape and comprises a first tubular portion 23 and a second tubular portion 24, both substantially cylindrical and of smaller and larger diameter respectively, and a flat annular wall 25 which joins them integrally together.

The portion 24 houses the brake shoes 12 and has an inner cylindrical surface 26 with which the brake shoes cooperate during braking.

The portion 23 of the drum 20 is mounted directly on the outer ring 12 of the support unit 10, which is provided for this purpose with an outer cylindrical surface 28 for centering the drum, and an annular flange 29, this latter in proximity to that end facing the interior of the vehicle. Specifically, the portion 23 of the drum 20 is contained axially between the flange 29 and the drive flange 7 of the axle shaft 6, to which flanges it is connected by a plurality of angularly equidistant screws 30 passing through axial holes 34, 35 in the drive flange 7 and portion 23 respectively, and screwed into corresponding threaded holes 36 in the flange 29 of the outer ring 12.

The wheel 2, provided with a central hole 37 to be engaged by a centering surface 38 provided on the portion 23 of the drum 20, is fixed against the wall 25 of the drum 20 by a plurality of bolts 40 passing through respective holes in said wall 25, and respective nuts 42.

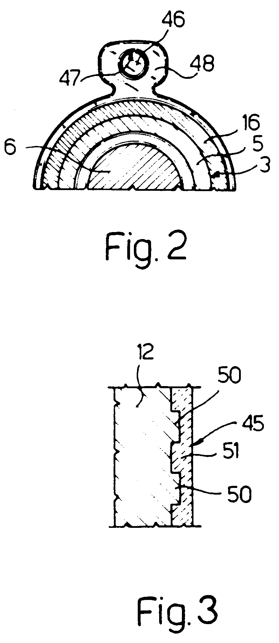

Finally, the assembly 1 comprises a device for measuring the velocity of the wheel 2, indicated overall by 44, to be connected to a conventional braking control device, not shown, for preventing wheel locking and corresponding skidding. The device 44 comprises a phonic wheel 45 formed on and integral with the front face of the outer ring 12 of the support unit 10, and a fixed magnetic sensor 46 of known type facing the phonic wheel 45. According to the present invention, the sensor 46, of substantially cylindrical shape, is housed for almost its entire length in a through axial hole 47 in a substantially radial protrusion 48 of the spacer ring 16 (Figure 2).

As is clearly shown in Figure 3, the phonic wheel 45 consists of a plurality of frontal teeth 50 of the ring 12, they being angularly equidistant from each other and conveniently embedded in a layer of applied plastics material 51. The layer 51 does not influence the magnetic characteristics of the phonic wheel 45, but prevents accumulation of dirt particles between the teeth which, in time, could disturb the reading of the sensor 46.

Finally, the assembly 1 comprises a pair of substantially annular protection plates 52, 53 mounted within an annular projection 54 on the inside of the drum wall 25 and on the spacer ring 16 respectively, with their respectively inner and outer edges facing each other axially.

The operation of the assembly is as follows.

The motion of the axle shaft 6 is transmitted by the flange 7 to the drum 20 (and hence to the wheel 2 connected to it) and to the outer ring 12 of the support unit 10. In known manner, the sensor 46 measures the rotational velocity of the phonic wheel 45, and hence of the wheel 2.

The resultant advantages of the assembly 1 are apparent from an examination of its characteristics.

Firstly, the sensor 46 is not mounted projectingly and is therefore not subjected to flexural vibration. Furthermore, the ring 16 which supports the sensor 46 is simply clamped axially between the inner ring of the support unit 10 and the shoulder 17 without requiring any welding, with obvious advantages in terms of velocity and ease of fitting.

Finally, it is apparent that modifications can be made to the described assembly, but without leaving the scope of protection of the present invention.

In particular, the sensor 46 can be housed in an annular radial flange of the ring 16; the phonic wheel 45 can consist of a component separate from the support unit 10; and finally the support unit 10 can be replaced by a pair of bearings supporting a hub on which the drum and wheel are mounted.

## Claims

1. An assembly (1) for connecting a wheel (2) to an industrial vehicle axle (3), of the type comprising radial and axial bearing means (10) interposed between said axle (3) and said wheel (2) and a velocity measurement device comprising a phonic wheel (45) angularly rigid with said wheel (2) and a fixed sensor (46) facing said phonic wheel (45), characterised by comprising a support ring (16) mounted on said axle (3) and having a radial protrusion (48), said sensor (46) being housed in said protrusion (48) at least for most of its extent, said support ring (16) being interposed between, and locked axially by, said bearing means (10) and shoulder means (17) provided on said axle.

2. An assembly as claimed in claim 1, characterised in that said bearing means comprise a rolling bearing unit (10) having an inner ring (11) mounted on said axis (3) and an outer ring (12) supporting a drum (20) of a brake (19) of said wheel (2), said wheel (2) being fixed to said drum (20).

3. An assembly as claimed in claim 2, characterised in that said axle is a live axle (3) comprising a fixed outer sleeve (5) and an axle shaft (6) housed in said sleeve (5) and provided with an end drive flange (7); said support ring (16) for said sensor (46) being mounted on said outer sleeve (5) between said inner ring (11) and a shoulder (15) of said outer sleeve (5).

4. An assembly as claimed in claim 3, characterized in that said outer ring (12) is connected to and angularly rigid with said drive flange (7) and said drum (20).

5. An assembly as claimed in claim 4, characterized in that said phonic wheel (45) consists of a plurality of angularly equidistant frontal teeth (50) of said outer ring (12) of said support unit (10).

6. An assembly as claimed in claim 5, characterised in that said teeth (50) are embedded in a layer of plastics material (51).

## Patentansprüche

1. Anordnung (1) zum Verbinden eines Rades (2) mit einer Achse eines Nutzfahrzeuges (3), umfassend eine radiale und axiale Lagereinrichtung (10), die zwischen der Achse (3) und dem Rad (2) angeordnet ist, und eine Geschwindigkeitsmeßeinrichtung, die ein phonisches Rad (45), das in Drehrichtung starr mit dem Rad (2) verbunden ist, und einen festen Sensor (46) aufweist, der in Richtung des phonischen Rades (45) weist,
dadurch **gekennzeichnet**, daß
sie einen auf der Achse (3) montierten und einen radialen Vorsprung (48) aufweisenden Tragring (16) aufweist, der Sensor (46) in diesem Vorsprung (48) zumindest zum größten Teil seiner Ausdehnung untergebracht ist, der Tragring (16) zwischen der Lagereinrichtung (10) und einem auf der Achse vorgesehenen Absatz (17) angeordnet und axial gesichert ist.

2. Anordung nach Anspruch 1,
dadurch **gekennzeichnet**, daß
die Lagereinrichtung eine Rollenlagereinheit (10), mit einem auf der Achse (3) montierten inneren Ring (11) und einem äußeren Ring (12) aufweist, der eine Trommel (20) einer Bremse (19) des Rades (2) lagert, wobei das Rad (2) an der Trommel (20) befestigt ist.

3. Anordnung nach Anspruch 2,
dadurch **gekennzeichnet,** daß
die Achse eine Antriebsachse (3) ist, die eine feststehende äußere Buchse (5) und einen Achsschaft (6) aufweist, der in der Buchse (5) aufgenommenen und mit einem Endantriebsflansch (7)versehen ist; wobei der Tragring (16) für den Sensor (46) auf der äußeren Buchse (5) zwischen dem inneren Ring (11) und einem Absatz (15) der äußeren Buchse (5) montiert ist.

4. Anordnung nach Anspruch 3,
dadurch **gekennzeichnet**, daß
der äußere Ring (12) in Drehrichtung starr mit dem Antriebsflansch (7) und der Trommel (20) verbunden ist.

5. Anordnung nach Anspruch 4,
dadurch **gekennzeichnet**, daß
das phonische Rad (45) aus mehreren in Drehrichtung äquidistanten, stirnseitigen Zähnen (50) des äußeren Rings (12) der Trageinheit (10) besteht.

6. Anordnung nach Anspruch 5,
dadurch **gekennzeichnet**, daß
die Zähne (50) in einer Schicht aus Kunststoffmaterial (51) eingebettet sind.

## Revendications

1. Un ensemble (1) pour relier une roue (2) sur un essieu d'un véhicule industriel (3), du type comprenant des moyens en forme de palier radial et axial (10) interposés entre ledit essieu (3) et ladite roue (2) et un appareil de mesure de vitesse comprenant une roue phonique (45), angulairement rigide avec ladite roue (2) et un capteur fixe (46) faisant face à ladite roue phonique (45), caractérisé en ce qu'il comprend une bague de support (16) montée sur ledit essieu (3) et comportant une saillie radiale (48), ledit capteur (46) étant logé dans ladite saillie (48), au moins sur la majeure partie de son étendue, ladite bague de support (16) étant interposée entre, et bloquée axialement par lesdits moyens formant palier (10) et des moyens formant épaulement (17) prévus sur ledit essieu.

2. Un ensemble selon la revendication 1, caractérisé en ce que lesdits moyens formant palier comprennent une unité formant roulement à rouleaux (10) comportant une couronne intérieure (11) montée sur ledit essieu (3) et une couronne extérieure (12) supportant un tambour (20) d'un frein (19) de ladite roue (2), ladite roue (2) étant fixée sur ledit tambour (20).

3. Un ensemble selon la revendication 2, caractérisé en ce que ledit essieu est un essieu actif (3) comprenant un manchon extérieur fixe (5) et un bout d'arbre (6) logé dans ledit manchon (5) et pourvu d'un flasque d'entraînement d'extrémité (7); ladite bague de support (16) dudit capteur (46) étant montée sur ledit manchon extérieur (5) entre ladite couronne intérieure (11) et un épaulement (15) dudit manchon extérieur (5).

4. Un ensemble selon la revendication 3, caractérisé en ce que ladite couronne extérieure (12) est reliée à et est rigide angulairement avec ledit flasque d'entraînement (7) et ledit tambour (20).

5. Un ensemble selon la revendication 4, caractérisé en ce que ladite roue phonique (45) comprend une pluralité de dents frontales angulairement équidistantes (50) de ladite couronne extérieure (12) de ladite unité de support (10).

6. Un ensemble selon la revendication 5, caractérisé en ce que lesdites dents (50) sont noyées dans une couche de matière plastique (51).
